# EUROPEAN PATENT APPLICATION

(11) **EP 2 743 916 A1**
(43) Date of publication of application: **18.06.2014**
(21) Application number: 13197089.9
(22) Date of filing: 13.12.2013
(51) Int. Cl.: G09G 5/00, H04N 19/00

(54) **Image display apparatus and method**

(30) Priority: 14.12.2012 KR 20120146000
(71) Applicant: Samsung Electronics Co., Ltd, Gyeonggi-do 443-742 (KR)
(72) Inventor: Lee, Junesok, 443-742 Gyeonggi-do (KR)
(74) Representative: Nederlandsch Octrooibureau

(57) **Abstract**

An image display apparatus and method for displaying a high redefinition image fast is provided. The image data display method of a terminal having a host device and a display module includes retrieving, at the host device, display data of an application from a memory in response to an application executing request, encoding the retrieved display data, transmitting the encoded display data to the display module, decoding, at the display module, the encoded display data, and displaying the decoded display data.

## Description

### TECHINICAL FIELD

The present disclosure relates to an image display apparatus and method. More particularly, the present disclosure relates to an image display apparatus and method for displaying a high redefinition image fast.

### BACKGROUND

Typically, a terminal device is equipped with a display module such as Liquid Crystal Display (LCD) and Organic Light Emitting Diodes (OLED). The display controller of the mobile terminal device and the controller of the display module use the same interface, and the display controller of the display module receives the image data supplied by the terminal device and displays the video on the display unit. The image data supplied by the terminal device is raw data in an RGB format.

Many applications running on terminal devices require supporting high definition and large size image data. For example, many applications running on a mobile terminal deal with high resolution images and thus the terminal devices are required to process high resolution User Interface (UI) images. In addition, terminal devices are featured with high definition games and thus the game execution screen needs to be transferred to the display module and displayed in real time. If the data rate between the terminal device and the display module is limited, this is likely to cause delay in high resolution image update. The higher the image resolution to be transmitted, the faster the display control device needs to operate.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure proposes an image display apparatus and method that is capable of displaying a high resolution image fast by enhancing the data rate between the terminal device and the display module. According to an aspect of the present disclosure, the terminal device transfers the image data to be displayed to the display module in a compressed format such that the display module decodes the compressed image data and displays the decoded high resolution image data fast.

In accordance with an aspect of the present disclosure, an image data display apparatus of a terminal is provided. The image data display apparatus includes a memory configured to store display data of applications, a host device including a host controller configured to process the display data according to an operation of the apparatus and a first display controller having an encoder configured to encode the display data of the application executed by the host controller, the host device further configured to encode the display data retrieved from the memory and output encoded display data, and a display module including a second display controller having a decoder configured to decode the encoded display data and a display panel configured to decode the encoded display data transmitted by the host device and display the decoded display data.

In accordance with another aspect of the present disclosure, an image data display method of a terminal having a host device and a display module is provided. The method includes retrieving, at the host device, display data of an application from a memory in response to an application executing request, encoding the retrieved display data, transmitting the encoded display data to the display module, decoding, at the display module, the encoded display data, and displaying the decoded display data.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram illustrating a configuration of an image display apparatus according to an embodiment of the present disclosure;
FIG. 2 is a diagram illustrating a principle of operations of an encoder and decoder according to an embodiment of the present disclosure;
FIG. 3 is a diagram illustrating display data transmission time according to an embodiment of the present disclosure;
FIG. 4 is a block diagram illustrating a configuration of an image display apparatus according to an embodiment of the present disclosure;
FIG. 5 is a flowchart illustrating a display data processing procedure between a host device and a display module of an image display apparatus according to an embodiment of the present disclosure;
FIG. 6 is a flowchart illustrating a procedure of transmitting display data from a host device to a display module in an image display apparatus according to an embodiment of the present disclosure;
FIG. 7 is flowchart illustrating a procedure of initializing an encoder of a host device of an image processing apparatus according to an embodiment of the present disclosure;
FIG. 8 is a flowchart illustrating a data display procedure of a display module of an image display apparatus according to an embodiment of the present disclosure; and
FIG. 9 is a block diagram illustrating a configuration of an image display apparatus according to an embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding, but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

In the present disclosure is characterized, a host device of a display module-equipped apparatus or system sends the display module the compressively encoded display data and the display module decodes the compressively encoded display data to display the display data. The host device is capable of transmitting the high resolution display data to the display module at a high speed and thus the display module is capable of displaying the high resolution image without delay. In the following description, the data transmitted from the host device to the display module may be any of User Interface (UI) data of the application, game interface display data, and motion and still image display data. In the following description, the data transmitted from the host device to the display module is referred to as display data.

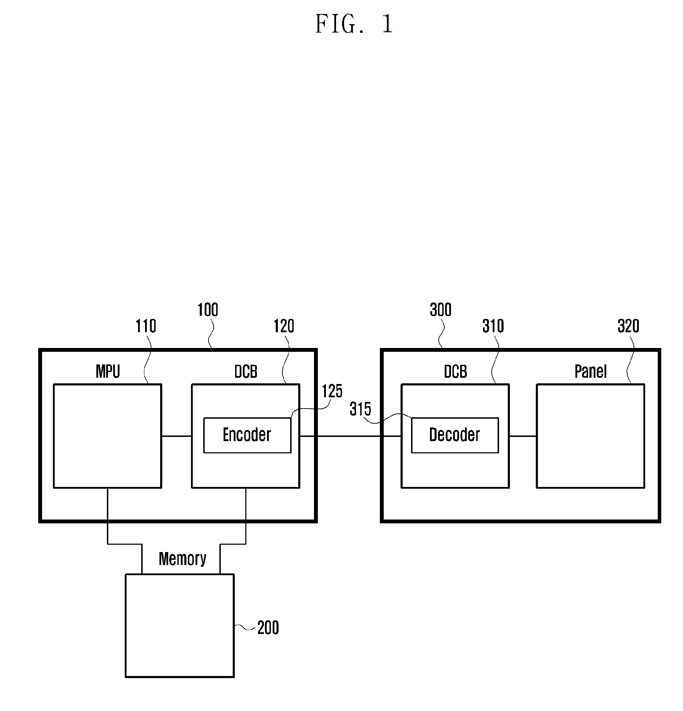

FIG. 1 is a block diagram illustrating a configuration of an image display apparatus according to an embodiment of the present disclosure.

Referring to FIG. 1, the image display apparatus includes a host device 100 and a display module 300. The host device 100 includes a Main Processing Unit (MPU) 110 for controlling operations and functions of the host device, a first Display Control Block (DCB) 120 for transmitting the display data output from the MPU 110 to the display module 300. In an embodiment of the present disclosure, the first DCB 120 of the host device 100 includes an encoder 125 to encode the display data to be transmitted to the display module 300. The memory 200 stores the display data which may be encoded or non-encoded (raw) data. The display module 300 includes a first DCB 310 for decoding the encoded display data from the host device 100 to original display data and a display panel 320 for displaying the display data under the control of the second DCB 310. The display data transmitted by the host device 100 may be compressively encoded data. Accordingly, the DCB 310 of the display module 300 is provided with a decoder 315 corresponding to the encoder 125 of the host device 100 to decode the compressively encoded display data from the host device 100 to recover decompressed display data.

The encoder 125 of the first DCB 120 and the decoder 315 of the second DCB 310 may perform encoding and decoding in the same coding scheme. The decoder 315 may further include other decoders in addition to the decoder for decoding the display data encoded by the encoder 125. This means that the display data stored in the memory 200 is the encoded display data while the encoded display data may be the display data encoded in a coding scheme other than the coding scheme of the encoder 125. Accordingly, the decoder 315 of the second DCB 310 may further include the decoders corresponding to the encoders operating in other schemes other than the decoder corresponding to the encoder 125.

In the operation of transmitting the display data at the host device 100, the MPU 110 controls the overall operation of the host device 100 and executes an application in response to a user request. The MPU 110 also controls displaying the display data associated with the executed application. The MPU 110 accesses the corresponding display data in the memory 200 to display the display data associated with the executed application. The MPU 100 transfers the uncompressed display data from the memory 200 to the first DCB 120, and the first DCB 120 encodes the display data and transmits the encoded display data to the display module 300.

In the operation of the display module 300 for displaying the encoded display data, since the display data transmitted by the host device 100 is the encoded display data, the second DCB 310 of the display module 300 decodes the encoded display data by means of the decoder 315 to recover the original display data (raw data) and displays the decoded display data on the display panel 320.

The image stored in the memory 200 may be the encoded display data or non-encoded display data (raw data). The encoded image may be the display data encoded in the same scheme as the encoder 125 or in a different scheme. The decoder 315 of the display module 300 operates in the same scheme as the encoder 125. The decoder 315 may further include a decoder capable of decoding the image encoded in an encoding scheme different from that of the decoder corresponding to the encoder 315. In this case, the MPU 110 of the host device 100 should know the decoder type of the display module 300.

In this case, if the display data accessed in the memory 200 is the non-encoded data, the MPU 110 transfers the display data to the first DCB 120 and the first DCB 120 encodes the display data and sends the encoded display data to the display module 300. Otherwise, if the display data accessed in the memory 200 is the encoded data, the MPU 110 determines whether the display module 300 can decode the encoded display data. The second DCB 310 determines whether the decoder 315 is capable of decoding the encoded display data accessed in the memory 200. If the display module 300 is capable of decoding the encoded display data, the MPU 110 controls the first DCB 120 to transmit the encoded display data to the display module 300 at is. Otherwise, if the display module 300 cannot decode the encoded display data, the MPU 110 decodes the encoded display data accessed in the memory 200 to recover the original display data (raw data) and outputs the decoded display data to the first DCB 120. The first DCB 120 encodes the display data and sends the encoded display data to the display module 300.

If the host device 100 transfers the display data to the display module 300, the second DCB 310 of the display module 300 determines the coding scheme of the compressed image, decodes the encoded display data by means of the decoder 315 in the corresponding coding scheme, and outputs the decoded display data to the display panel 320.

The encoder 125 may include a Pixel Average Map (PAM) generator, a Pixel Smoothness Map (PSM) generator, and a Run Length Code (RLC) encoder.The decoder 315 may include a RLC decoder, a Pixel Average Map (PAM) retriever, and a Pixel Smoothness Map (PSM) retriever.

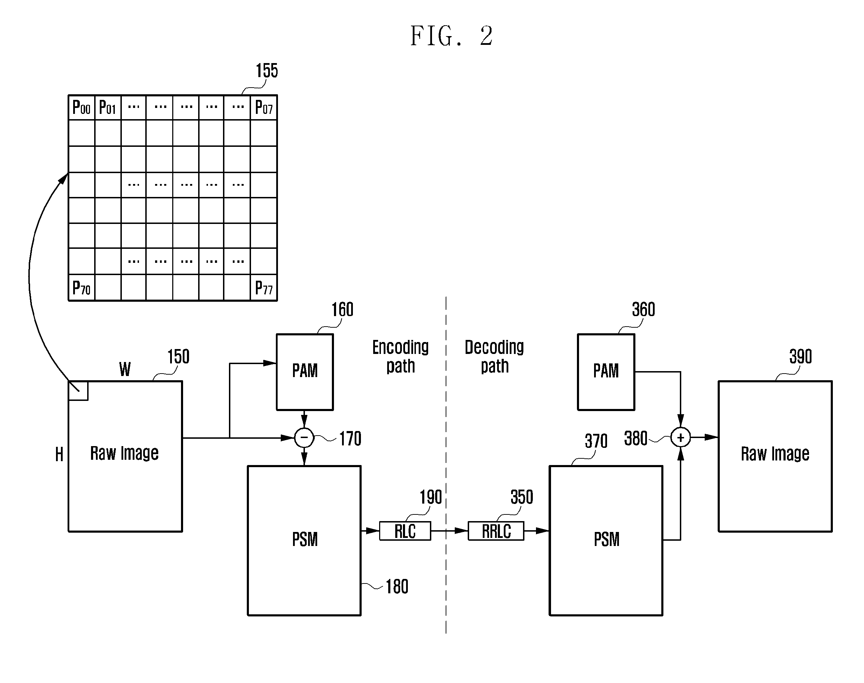

FIG. 2 is a diagram illustrating a principle of operations of an encoder and decoder according to an embodiment of the present disclosure. FIG. 2 shows the operations of encoding the display data at the host device 100 and decoding the encoded display data at the display module 300.

Referring to FIG. 2, the encoder 125 divides the display data (raw data) 150 into a plurality of equal areas as denoted by reference number 155 to generate a PAM. In an embodiment of the present disclosure, it is assumed that the PAM area has a size of 8*8 pixels and, in this case, the pixels constituting the PAM are referred to as P00 to P77 as denoted by reference number 155, and the pixel average may be PAM00 = (P00+P01+ ... +P77)/64. The PAM generator 160 generates and stores the average value PAM00. The difference value generator 170 compares the pixel average output by the PAM generator 160 and the pixels of the display data to generate a difference value.The PSM generator 180 performs smoothing on pixel valuesthat vary significantly among the differences between the display data and PAM (e.g., pixel values differing from the PAM by more than a predetermined value). The RLC encoder 190 encodes the difference values output from the PSM generator 180 to output a bit stream having a variable length.

In the display module receiving the encoded display data, the decoder 315 decodes the bit stream encoded to have a variable length by means of the RLC decoder 350. The PAM retriever 360 retrieves the PAM values used as average values at the respective PSM regions, and the PSM retriever 370 retrieves the PSM values processed in encoding with the output of the RLC decoder 350 for recovery. The difference compensator 380 sums the outputs of the PSM retriever 370 and the PSM retriever 360 to recover the original pixel value so as to recover the original display data (i.e. display data before encoding) as denoted by reference number 390, and the panel 320 displays the recovered display data 390.

As described above, if the display data of the application running on the host device 100 is transferred to the display module 300, the display data may not be displayed normally depending on the data rate of the display data. This may occur when the display data is a high pixel image having a size greater than the data rate between the host device 100 and the display module 300. In an embodiment of the present disclosure, the host device 100 transmits the display data, which is encoded compressively as described above, and the display module decodes the compressively encoded display data so as to overcome this issue. In the case of transmitting a large display data, it takes a relatively long time for the host device 100 to process the display data,which may cause processing delays of other applications of the host device 100. If the host device 100 transmits compressively encoded display data, it is possible to reduce the display data processing time, whereby the residual time can be used for processing other applications' data.

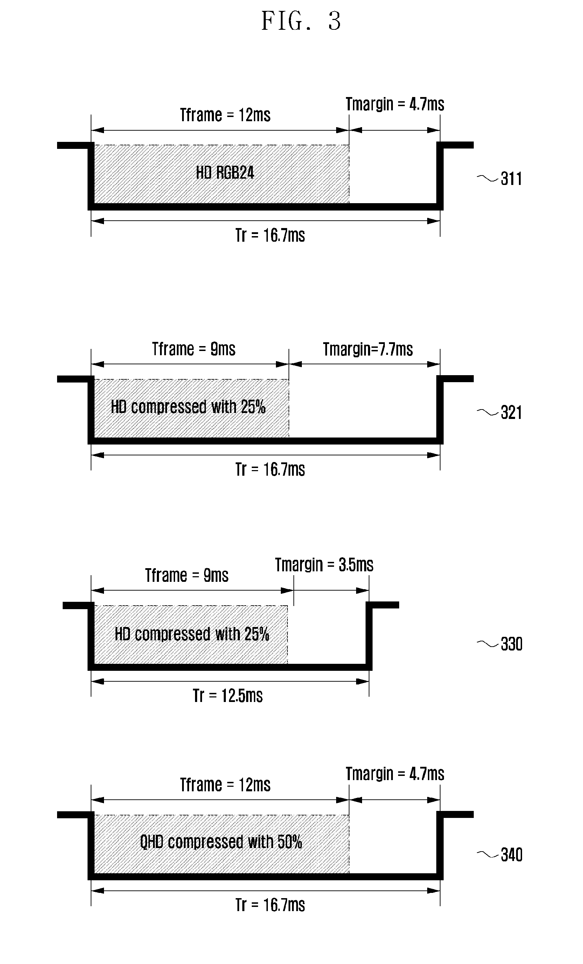

FIG. 3 is a diagram illustrating display data transmission time according to an embodiment of the present disclosure.

Referring to FIG. 3, Tframe denotes the time taken for updating the display data of 1 frame, and Tmargin denotes the margin time after the transmission of the display data in one frame duration. Accordingly, the frame time Tr necessary for transmitting 1 frame display data is equal to Tframe + Tmargin.

Reference number 311 denotes the case where the non-encoded display data is transmitted. The display data update time Tframe is 12ms and the frame margin time Tmargin is 4.6ms and thus the frame display period Tr is 16.7ms (when the display data update period is 60Hz (60Hz refresh rate is maintained)). If the display data as denoted by reference number 311 is compressed as much as 25% for transmission, the Tframe becomes 9ms and the frame margin time Tmargin becomes 7.7ms as denoted by reference number 321. Accordingly, the host device 100 secures the elongated frame margin time Tmargin for other applications processes.

In the case that the display data is transmitted in a compressively encoded format, the frame display period Tr of the display data between the host device 100 and the display module 300 can be reduced (faster refresh rate). If the frame refresh rate increases to 80Hz, the frame display period Tr becomes 12.5ms. In this case, if the compressive encoding rate is 25%, the host device 100 and the display module 300 are capable of processing the display data with the Tframe of 9ms and the Tmargin of 3.5ms as denoted by reference number 330. This means that the host device 100 and the display module 300 are capable of processing the display data at faster processing rate. Reference number 340 of FIG. 3 denotes the case of processing the display data of Quarter Full HD (QHD). Tr is 16.7ms for the refresh rate of 16.7ms and, if the QHD display data is compressed as much as 50%, the Tframe is 12ms and Tmargin is 4.7ms. This means that if the compressive encoding rate increases, the larger display data can be displayed in the same time frame.

As described with reference to FIG. 3, if the host device 100 encodes the display data compressively, it is possible to transmit the compressively encoded display data quickly and thus secure an elongated frame margin time (Tmargin of Tr (refresh period) for processing other applications. The host device may be configured with a shortened frame display period Tr (refresh period) such that the display image frame display period arrives quickly. The host device is capable of transmitting the large size high resolution display data in the preset frame display period.

In the above described image display method of the present disclosure, the host device transmits the image data to the display module in a compressively encoded format, and the display module decodes the compressed image to display the image data. Accordingly, the host device is capable of transmitting the high resolution image data to the display module fast, and the display module is capable of displaying the high resolution image data without delay. As shown in FIG. 3, if the high resolution image data is refreshed at 60Hz (i.e. if 1 frame image is updated within 16.7ms), the host device is capable of shortening the display data transfer time to process other application data in the residual time. Also, by transmitting the high pixel image data in a compressively encoded format, it is possible to increase the frame refresh rate (e.g. 60Hz to 80Hz). If the image data is transmitted in the compressively encoded format, the controller of the host device is capable of using the time remained after transmitting the frame image data (i.e. transmitting the frame image data to the display module) for running other applications.

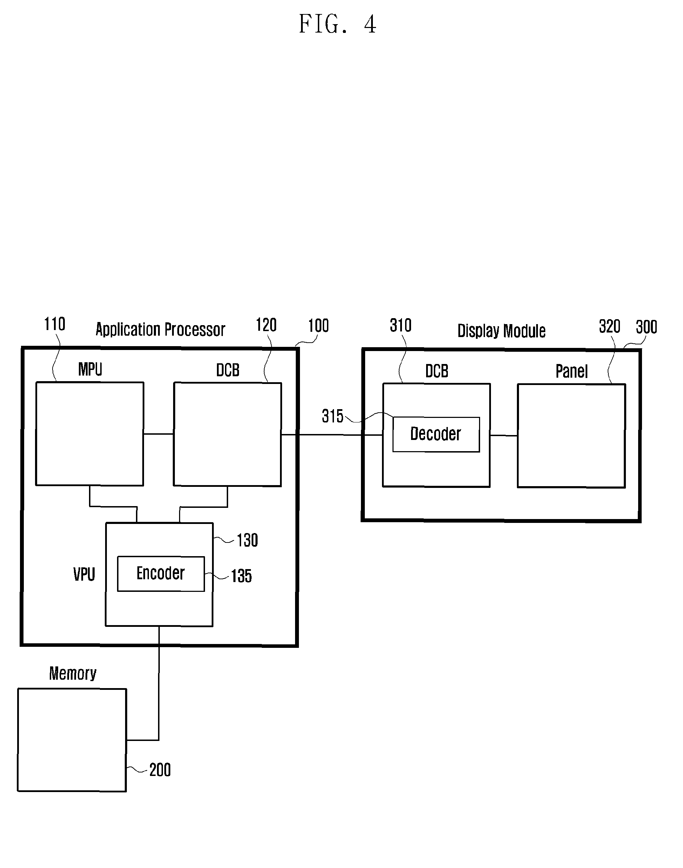

FIG. 4 is a block diagram illustrating a configuration of an image display apparatus according to an embodiment of the present disclosure.

Referring to FIG. 4, the image display apparatus includes a host device and a display module. FIG 4 is directed to the case where the encoder is not included in the DCB of the host device but in the VPU 130 of the host device.

Referring to FIG. 4, the host device 100 includes a MPU 110 for controlling the operations and functions of the host device 100, a Video Processing Unit (VPU) 130 for retrieving the display data in the memory 200 and encodes the retrieved video data, and a first Display Control Block (DCB) 120 for transferring the display data output from the VPU 130 to the display module 300. According to an embodiment of the present disclosure, the VPU 130 of the host device 100 includes an encoder 135 for encoding the display data to be transmitted to the display module 300 compressively. The memory 200 stores the display data, the display data being the encoded display data or non-encoded display data (raw data). The display module 300 includes a second DCB 310 for decoding the encoded display data received from the host device 100 and a display panel 320 for displaying the decided data under the control of the second DCB 310. The display data transmitted by the host device 100 is compressively encoded data. Accordingly, the DCB 310 of the display module 300 decodes the compressively encoded display data from the host device to recover the original display data.

The encoder 135 of the VPU 130 and the decoder 315 of the second DCB 310 perform encoding and decoding operations in the same coding scheme. The decoder 315 may further include another decoder in addition to the decoder for decoding the display data encoded by the encoder 135. This means that the display data stored in the memory 200 is the encoded display data and the encoded display data may be the display data encoded in a coding scheme from that of the encoder 135. Accordingly, the decoder 315 of the second DCB 310 may further include decoders corresponding to the encoders operating in coding schemes different from that of the decoder corresponding to the encoder 135.

In the operation of the host device 100 transmitting the display data, the MPU 110 controls the overall operations of the main device 100 and executes an application in response to a user request. The MPU 110 also controls display of the display data associated with the executed application. In order to display the display data associated with the executed application, the MPU 110 controls the VPU 130 to process the display data. The VPU 130 accesses the corresponding display data in the memory 200. The display data stored in the memory may be non-encoded data. The VPU 130 encodes the display data retrieved from the memory 200 by means of the encoder 135 and outputs the encoded display data to the first DCB 120.The first DCB 120 transfers the encoded display data to the display module 300.

The image stored in the memory 200 may be the encoded display data or non-encoded display data (raw data). The encoded data may be the display data encoded in a coding scheme identical to or different from that of the encoder 135. The decoder 315 of the display module 300 operates in the same coding scheme as the encoder 135. The decoder 315 may operate in a different coding scheme for decoding the image encoded in a certain coding scheme. In this case, the MPU 110 of the host device 100 should know the types of the decoders of the display module 300.

If the display data accessed in the memory 200 is non-encoded data, the VPU 130 encodes the display data by means of the encoder 130 and sends the encoded display data to the first DCB 120. Otherwise, if the display data accessed in the memory 200 are the encoded data, the VPU 130 determines whether the display module 300 can decode the encoded display data. The VPU 130 determines whether the decoder 315 of the second DCB 310 can decode the encoded display data accessed in the memory 200. If it is determined that the display module 300 is capable of decoding the encoded display data, the VPU 130 controls the first DCB 120 to transfer the encoded display data to the display module 300. Otherwise, if it is determined that the display module 300 cannot decode the encoded display data, the VPU 130 decodes the encoded display data accessed in the memory 200 into the original display data (raw data), encodes the decoded display data by means of the encoder 135, and outputs the encoded display data to the first DCB 120.

The display module 300 operates in the same way as the display module 300 of FIG. 1.

As described above, the encoder 135 may include a PAM generator, a PSM generator, an RLC encoder, and the decoder 315 may include an RLC decoder, a PAM retriever, and a PSM retriever.

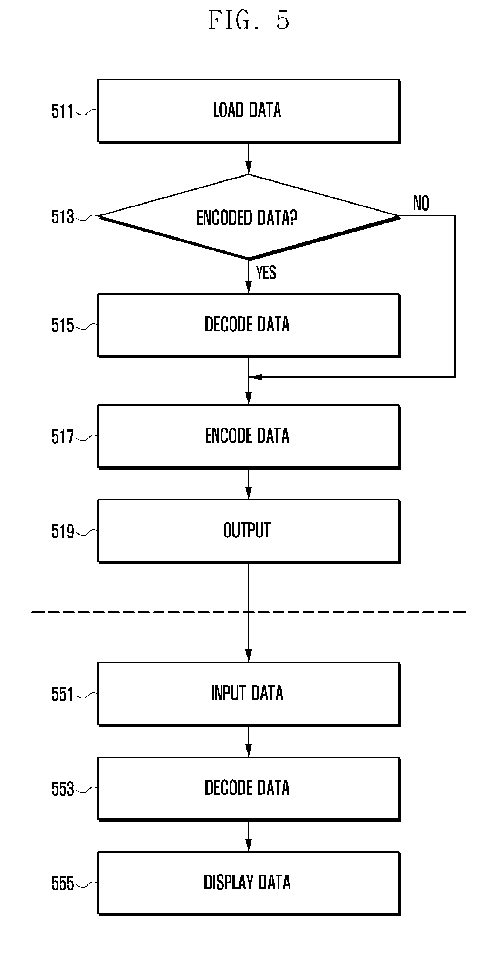

FIG. 5 is a flowchart illustrating a display data processing procedure between a host device and a display module of an image display apparatus according to an embodiment of the present disclosure.

Referring to FIG. 5, operations 511 to 519 are associated with the display data processing procedure at the host device, and operations 551 to 555 are associated with the display data processing procedure at the display module.

In operation 511, if it is necessary to display the display data, the host device 100 loads the display data stored in the memory 200. The host device 100 determines whether the loaded display data is the encoded display data at operation 513. This is because the encoded data may be encoded still or motion image data. A motion image can be encoded in various formats such as MPEG4. Since the display module is configured to display the non-encoded display data (raw data), the encoded display data should be input to the display module 300 in a format capable of being processed by the display module 300. If the display data is encoded in a format which the display module 300 cannot decode, the control unit 100 decodes the display data loaded from the memory 200 to the original data (e.g. JPEG decoding and MPEG decoding) at operation 515.

If non-encoded data is loaded at operation 511 or after decoding the encoded display data at operation 513, the host device 100 encodes the display data by means of the encoder at operation 517 and outputs the encoded display data to the display module 300 at operation 519.

The display module 300 may include a plurality of decodes capable of decoding the encoded display data. In an embodiment of the present disclosure, the encoders 125 and 135 of the host device 100 may be the encoder for encoding the raw data compressively, and the display module 300 includes the corresponding decoder 315. However, the display unit 300 may further include decoders operating with the coding schemes used most frequently. For example, the decoders may include a JPEG decoder and/or an MPEG decoder. In this case, the display module 300 may include the JPEG decoder and/or MPEG decoder in addition to the decoder 315, and the host device 100 should know the types of the decoders of the display module 300. If it is determined that the coding scheme used for encoding the display data is supported by the display module 300 (e.g. JPEG and/or MPEG), the host device may bypass the display data at operation 513. In this case, the display data is in the state of being compressively encoded such that the controller 100 skips the encoding process of the encoder 125 or 135 and transmits the encoded display data to the display module 300 as is. The display module 300 analyzes the header of the encoded data transmitted by the host device 100 to determine the coding scheme and controls the corresponding decoder to decode the received display data.

If the encoded display data is received, the display module 300 inputs the display data to the decoder 551, determines the coding scheme used for encoding the display data and decodes the display data in the coding scheme at operation 553, and displays the decoded display data on the display panel 320.

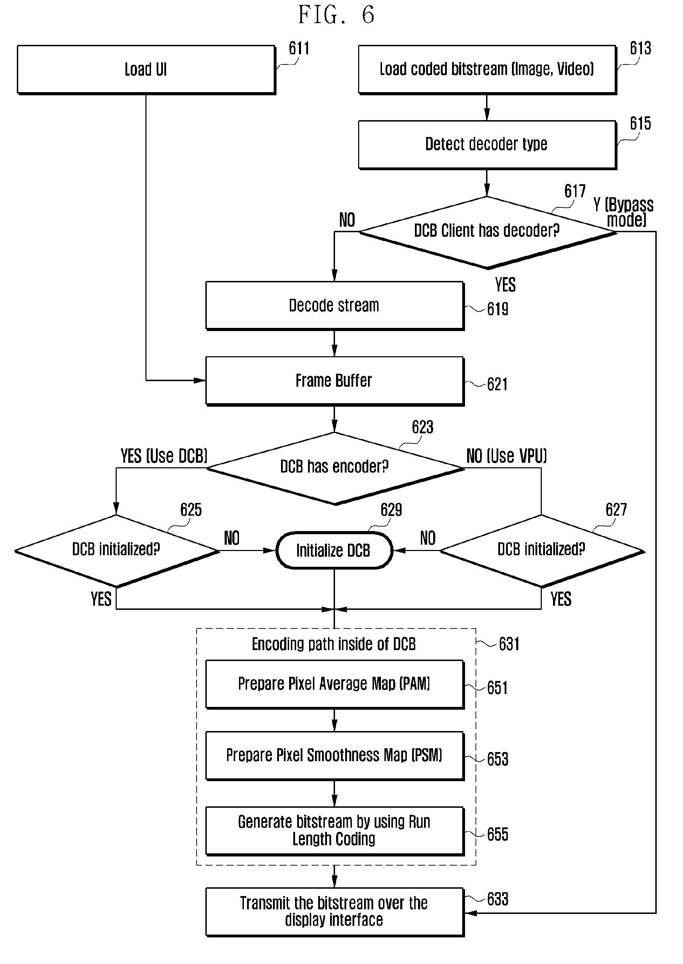

FIG. 6 is a flowchart illustrating a procedure of transmitting display data from a host device to a display module in an image display apparatus according to an embodiment of the present disclosure.

Referring to FIG. 6, the display data of the host device includes the encoded and/or non-encoded data. The encoded display data includes still and motion image data, and the non-encoded display data includes a UI image. In the case of the encoded display data, the host device 100 loads the encoded display data from the memory 200 at operation 613 and analyzes the type of the encoded data at operation 615. The loaded display data may be the encoded image data, and the image data may be a still or motion image. After determining the coding scheme of the display data, the host device 100 determines whether the display module 300 has a decoder supporting the determined coding scheme at operation 617. If the display module 300 has the decoder capable of deciding the display data, the host device 100 transmits the encoded display data to the display module 300 as is at operation 633.

However, if the display module 300 has no decoder supporting the determined coding scheme, the host device 100 decodes the encoded display data to recover the raw data at operation 619 and buffers the decoded data in the frame buffer at operation 621. If the display module 300 cannot decode the encoded display data, the host device 100 decodes the encoded display data to the raw data. If the non-encoded data (raw data) such as UI display data are loaded at operation 611, the host device 100 buffers the non-encoded data in the frame buffer at operation 621. The reason for buffering the non-encoded display data in the frame buffer is to encode the non-encoded display data by means of the encoder 125 or 135.

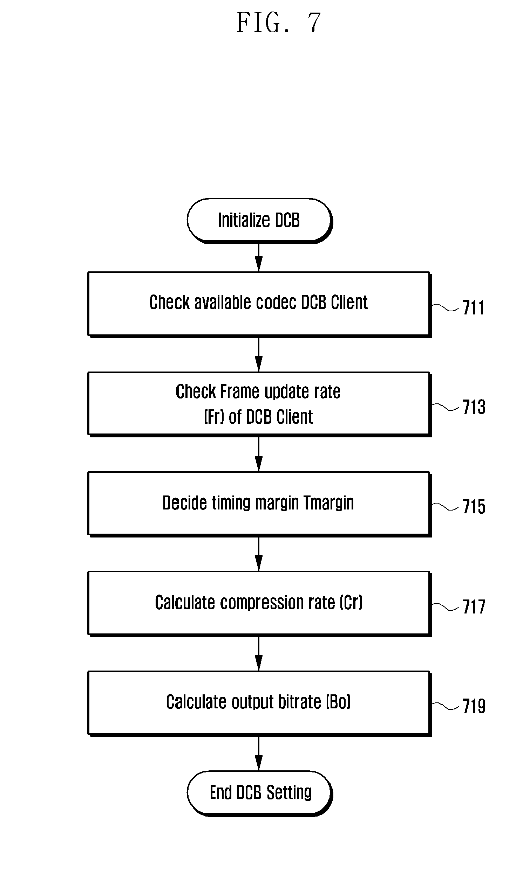

While buffering the display data, the host device 100 determines the position of the encoder and whether the encoder is initialized through operations 623 to 627. The host device 100 determines whether the encoder is located at the VPU 130 or the first DCB and whether the encoder is in the initialized state. If the encoder is not initialized, the host device 100 and initializes the encoder at operation 629. The encoder initialization is performed through a procedure described below with respect to FIG. 7.

FIG. 7 is a flowchart illustrating a procedure of initializing an encoder of a host device of an image processing apparatus according to an embodiment of the present disclosure.

Referring to FIG. 7, the host device determines the codec type available at the display module at operation 711. The codec may include various still and motion image codecs, including JPEG, MPEG, PNG, and BMP codecs. The host device 100 also determines the type of Variable Length Code (VLC) and Reversible Variable Length Code (RVLC) used in the encoder of the host device 100 and the decoder of the display module 300. The VLC may be a Huffman code or an arithmetic code. The host device 100 determines the refresh rate Fr (frame update rate/frequency) of the display data in operation 713. The refresh rate Fr = 1/Tr and Tr (1 frame time for frame update) is the time for displaying the display data of 1 frame as described with reference to FIG. 3 and, as a consequence, Tframe = Width*Height*Tpix(time to write 1 pixel) (i.e. the frame data size becomes Width*Height*Pixel). The host device 100 determines Tmargin of Fr at operation 715. The host device 100 calculates the coding rate (compression rate) at operation 717. The compressed frame display data transmission time (Time to update 1 compression frame (Tcframe)) can be calculated as Tcframe=Tframe*Cr, and the cording rate (compression rate (Cr) can be calculated as Cr=Tcframe/Tframe. After calculating the coding rate, the host device 100 calculates the output bitrate Bo at operation 719. The output bitrate is calculated as Bo=Width*Height*BPP*Cr where BPP denotes bits per pixel.

While the encoder 125 or 135 is initialized as shown in FIG. 7, the host device encodes the loaded display data or decoded display data at operation 631 and transfers the encoded display data to the display module 300 at operation 633. The host device 100 may encode the display data as described with reference to FIG. 2. The host device generates PAM of the display data to calculate the average value and acquires a difference between the display data and the PAM value at operation 651, generates PSM of the difference values at operation 653, generates the VLC-encoded bit stream at operation 655, and transmits the encoded bit stream to the display module 300 at operation 633.

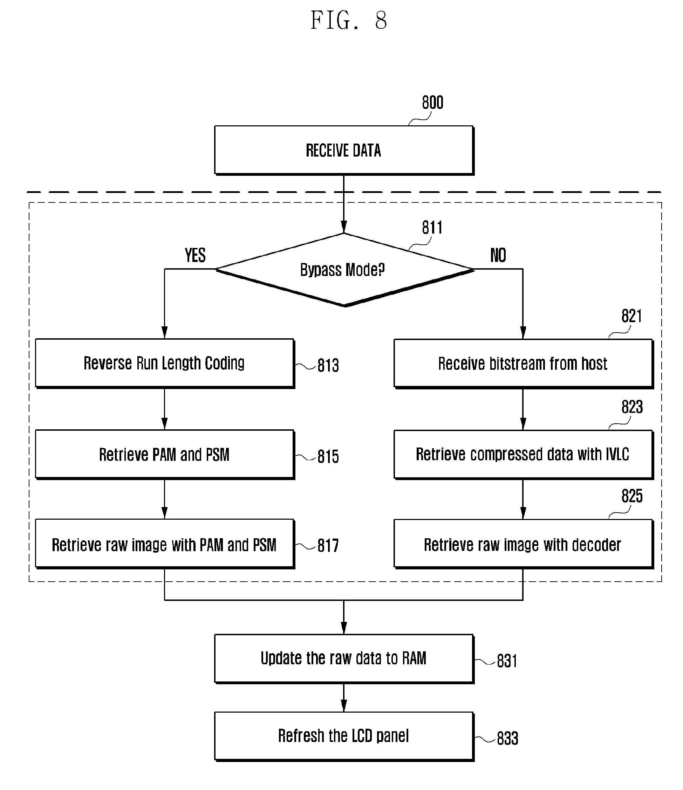

FIG. 8 is a flowchart illustrating a data display procedure of a display module of an image display apparatus according to an embodiment of the present disclosure.

Referring to FIG. 8, the display module 300 receives display data from the host device at operation 800 and determines the type of the encoded display data at operation 811. If the display data is not transmitted by the host device 100 in the bypass mode, the display module 300 receives the bit stream transmitted by the host device 100 at operation 821, retrieves the compressed data at operation 823, and decodes the encoded display data with a corresponding decoder at operation 823. The decoding process of operations 821 to 825 is performed when the host device 100 transmits the encoded display data in the bypass mode, and the display data may be a still or motion image data.

If the data transmission is performed in the bypass mode, the display module 300 decodes the encoded data (reverse Run Length Coding) at operation 813. The display module 300 retrieves PAM and PSM at operation 815 and recovers the original display data with PAM and PSM at operation 817. The process of operations 813 to 817 is performed as described with reference to FIG. 2.

After decoding the encoded display data, the display module 300 updates the decoded display data (raw data) at operation 831 and displays the updated data on the display panel 320 at operation 833.

As described above, if the display data of the application running on the host device 100 is transmitted to the display module 300, the host device 100 transmits the display data in a compressively encoded format and thus the display module 300 decodes the encoded display data and displays the decoded display data. If the display data is already encoded, the host device 100 determines the decoder type of the display module 300 and, if the display module 300 can decode the encoded display data, bypasses the encoded display data to the display module without a compressive encoding process.Otherwise, if the display module 300 cannot decode the encoded display data, the host device 100 decodes the encoded display data and then encodes the display data in a format capable of being decoded in the display module 300.

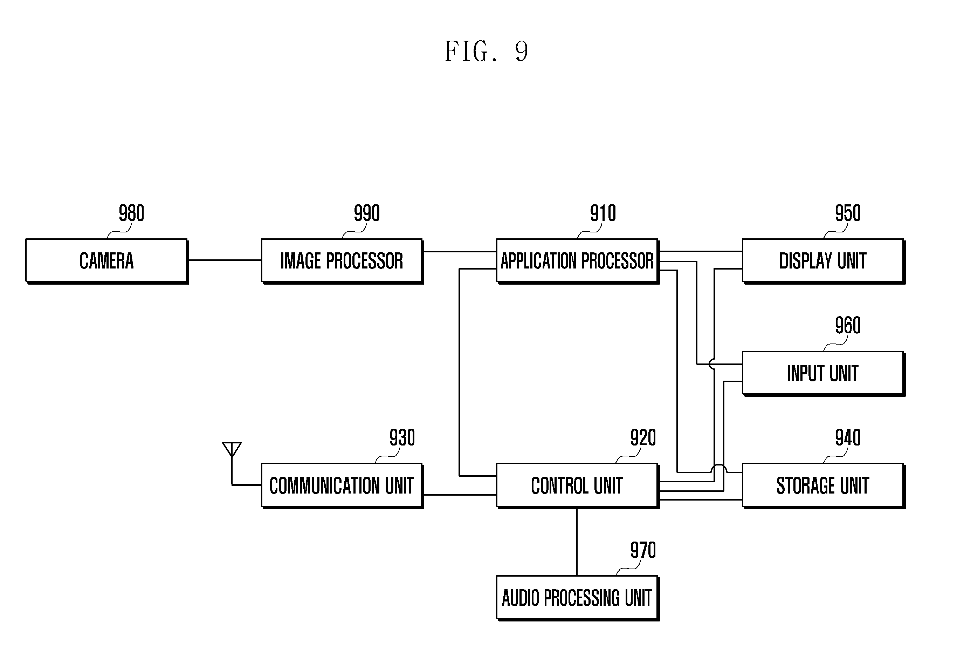

FIG. 9 is a block diagram illustrating a configuration of an image display apparatus according to an embodiment of the present disclosure.

Referring to FIG. 9, the image display apparatus can be any of a mobile phone, a smartphone, a tablet PC, a portable computer, and a Music Player (MP).

Referring to FIG. 9, the camera 980 includes an image sensor for taking an image. The image processor 990 generates the viewing image displayed on the screen of the display unit 950 and the capture image to be captured and stored in response to a capture request.

The application processor 910 is responsible for various application functions of the image display apparatus. The application processor 910 processes the viewing and/or capture of images generated by the image processor while the camera 980 is operating. According to an embodiment of the present disclosure, the application processor may be the host device 100 and may include the first DCB 120 having the encoder 125. If the first DCB 120 has no encoder, the application processor 910 may further include the VPU 130 having the encoder 135.

The communication unit 930 is responsible for communication with external devices and base station. The communication unit 930 may include a transmitter having a frequency up converter for up-converting the transmission signal to RF band signal and a power amplifier and a receiver having a low noise amplifier for amplifying the received RF signal and a frequency down converter for downconverting the received RF signal to the base band signal. The communication unit 930 may include a modulator for modulating the transmission signal and sending the modulation signal to the transmitter and a demodulator for demodulating the signal from the receiver. The modulator/demodulator may support at least one of WCDMA, GSM, LTE, Wi-Fi, and WiBro modulations.

The control unit 920 is responsible for controlling telephony and data communication functions of the apparatus. The control unit 920 may include the modulator/demodulator of the communication unit 930.In this case, the communication unit 930 may include only the RF communication part,and may be capable of performing modulation/demodulation and encoding/decoding on the communication signals. The audio processing unit 970 connects to the transmitter/receiver (microphone and speaker) to process voice signals in the telephony mode under the control of the control unit 920.

The input unit 960 generates various operation command and data input signals to the control unit 920 and the application processor 910. The display unit 950 displays the display data of the application running under the control of the application processor 910. The display unit 950 may include the second DCB 310 having the decoder 315 and the display panel 320 for displaying the display data under the control of the second DCB 310 according to an embodiment of the present disclosure. The display unit 950 decodes the encoded display data output from the application processor 910 and displays the decoded display data (raw data). The input unit 960 may be a touch panel capable of a touch gesture made by the user, and the display unit 950 may be any of Liquid Crystal Display (LCD) or Organic Light Emitting Diodes (OLED) panels. The input unit 960 and the display unit 950 may be integrated into a touchscreen. The input unit may include buttons arranged outside of the apparatus.

The storage unit 940 may include a program memory for storing Operation System (OS) of the apparatus and application programs according to an embodiment of the present disclosure and a data memory for storing data associated with the execution of the programs and generated by the programs. The storage unit 940 may include the memory 200 for storing the display data of the respective applications that are retrieved under the control of the application processor 910 in association with the operation of the applications. The display data may be the encoded display data (coded data) or the non-encoded display data (raw data). The storage unit may be implemented with a non-volatile memory such as flash memory and volatile memory such as Random Access memory (RAM).

In the above structured apparatus, the application processor 910 may be the host device 100 and the display unit 950 may be the display module 300.

The application processor 910 operates as a controller of the image processor 990. The image processor 990 operates the camera 980 and processes the preview image and still and/or motion images under the control of the application processor 910. The application processor 910 outputs the viewing image to the display unit 950 for display and the encoded still and motion images to the storage unit 940 for storage.

The apparatus is also capable of performing incoming/outgoing telephony and communication services. In the outgoing telephony mode, if the user inputs a recipient's phone number and call request, and the control unit 920 controls the communication unit 930 to establish the communication line for placing the outgoing call through the base station. If an incoming call is received, the control unit 920 alerts the user to the incoming call and displays the incoming call information on the screen of the display unit 950. If the user responds through the input unit 960, the control unit 920 establishes the communication line for the communication service. In the case of the data communication, the communication line is established in the similar way to the telephony service.

The apparatus may execute various applications. If the user inputs a request for execution of a certain application through the input unit 910, the application processor 910 executes the corresponding application and displays the execution result on the screen of the display unit 950. The application processor 910 accesses the uncompressed display data such as UI or the compressively encoded display data such as image and outputs the accessed display data to the display unit 950 for display.

If the user request for executing a certain application is received through the input unit 960, the application processor 910 retrieves the display data of the corresponding application from the storage unit 940 and analyzes and processes the display data as described above with reference to FIGS. 5 and 6. If the display data is the non-encoded data, the display data is encoded by the encoder 125 or 135 as described with reference to FIG. 2 and then output to the display unit 950. The display unit 950 decodes the encoded display data as described with reference to FIG. 2 and then displays the decoded display data. If the retrieved display data is already encoded, the application processor 910 determines whether the display unit 950 has a decoder capable of decoding the encoded display data and, if so, transmits the retrieved display data as is. Otherwise, if the display unit 950 has no decoder capable of decoding the encoded display data, the application processor 910 decodes the encoded display data, encodes the display data by means of the encoder 125 or 135, and transmits the encoded display data to the display unit 950.

The apparatus including a host device for processing various applications data and a display module for displaying the display data of the applications may fail to display the display data normally depending on the display data size and/or data rage. This occurs when the size of the display data is greater than the data size greater than the data rate between the host device and the display module. The present disclosure addresses this issue in such a way that the host device transmits the display data in a compressively encoded format and the display module decodes the compressively encoded display data so as to overcome the above problem. In the case of transmitting large size display data, the host device has to assign a large amount of time for processing the display data, and this may cause processing delay of other application data stacked to be processed by the host device 100. The image display method of the present disclosure is capable of allowing for the host device to transmit the display data in a compressively encoded format so as to reduce the display data processing time and process other application data in the residual time secured in such a way.

While the present disclosure has been shown and described with reference to various embodiments thereof, it will be understood by skilled in the art that various changes in form and details may be made therein without departing from the spirit and scope of the present disclosure as defined by the appended claims and their equivalents.

## Claims

1. An image data display apparatus of a terminal, the apparatus comprising:
a memory configured to store display data of applications;
a host device including a host controller configured to process the display data according to an operation of the apparatus and a first display controller having an encoder configured to encode the display data of the application executed by the host controller, the host device further configured to encode the display data retrieved from the memory and output encoded display data; and
a display module including a second display controller having a decoder configured to decode the encoded display data and a display panel configured to decode the encoded display data transmitted by the host device and display the decoded display data.

2. The apparatus of claim 1, wherein the host device determines, when the display data is the encoded display data, whether the display module has a decoder capable of decoding the encoded display data, transmits, when the display module has a decoder capable of decoding the encoded display data, the encoded display data, and, if the display module does not have a decoder capable of decoding the encoded display data, decodes the encoded display data, encodes the decoded display data using the encoder, and transmits the encoded data.

3. The apparatus of claim 2, wherein the display data retrieved by the host device is one of encoded still and motion image data and non-encoded User Interface (UI) image data.

4. The apparatus of claim 3, wherein the host device comprises:
an image processor including an encoder configured to encode the display data stored in the memory,
wherein the image processor encodes the display data retrieved from the memory via the encoder and outputs the encoded display data to the first display controller under the control of the host controller.

5. The apparatus of claim 4, wherein the host device determines a frame refresh rate during initialization of the first and second display controllers so as to determine a frame margin and calculates a compression rate and an output data rate of the display data to configure the display controllers.

6. The apparatus of claim 5, wherein the encoder of the first display controller comprises:
a Pixel Average Map (PAM) generator configured to generate pixel average values in a predetermined region of the display data;
a difference value generator configured to generate a difference value between the pixels of the display data and the average values;
a Pixel Smoothness Map (PSM) generator configured to smooth the pixels having values changing significantly in output of the difference value generator; and
a variable encoder configured to encode the pixels output from the PSM generator to have a variable length.

7. The apparatus of claim 6, wherein the decoder of the second display controller comprises:
a variable decoder configured to decode the display data of variable length-encoded bit stream transmitted by the host device;
a Pixel Average Map (PAM) retriever configured to retrieve average values of the pixels in the predetermined region of the decoded display data;
a Pixel Smoothness Map (PSM) retriever configured to retrieve smoothing values of the pixels output from the variable decoder; and
a difference value compensator configured to compensate the pixels by adding pixels output from the PAM retriever and PSM retriever.

8. An image data display method of a terminal having a host device and a display module, the method comprising:
retrieving, at the host device, display data of an application from a memory in response to an application executing request;
encoding the retrieved display data;
transmitting the encoded display data to the display module;
decoding, at the display module, the encoded display data; and
displaying the decoded display data.

9. The method of claim 8, further comprising:
determining, at the host device when the display data is the encoded display data, whether the display module has a decoder capable of decoding the encoded display data;
transmitting, when the display module has the decoder capable of decoding the encoded display data, the encoded display data;
decoding, when the display module has no decoder capable of decoding the encoded display data, the encoded display data;
encoding the decoded display data using the encoder; and
transmitting the encoded data to the display module.

10. The method of claim 9, wherein the display data retrieved by the host device is one of encoded still and motion image data and non-encoded User Interface (UI) image data.

11. The method of claim 10, further comprising:
determining, at the host device, a frame refresh rate in processing the display data;
determining a frame margin; and
calculating a compression rate and an output data rate of the display data.

12. The method of claim 11, wherein the encoding of the display data comprises:
generating pixel average values in a predetermined region of the display data;
generating a difference value between the pixels of the display data and the average values;
smoothing the pixels having values changing significantly from the average values in output of the difference value generator; and
variable-length encoding the smoothed pixels to generate a bit stream.

13. The method of claim 12, wherein the decoding, at the display module, of the encoded display data comprises:
decoding the display data of variable-length encoded bit stream from the host device;
extracting the average values of the pixels output from a variable decoder; and
recovering the pixels by adding the averaged values and smoothed pixels.
